# EUROPÄISCHE PATENTSCHRIFT

(11) **EP 2 351 059 B1**
(45) Veröffentlichungstag und Bekanntmachung des Hinweises auf die Patenterteilung: **20.04.2016**
(21) Anmeldenummer: 09793450.9
(22) Anmeldetag: 06.11.2009
(51) Int. Cl.: H01H 13/06, H05K 5/00, E05B 81/54

(54) **KOMPONENTENTRÄGER FÜR IM WESENTLICHEN ELEKTRISCHE BAUELEMENTE**
COMPONENT CARRIER FOR SUBSTANTIALLY ELECTRICAL COMPONENTS
SUPPORT DE COMPOSANTS POUR COMPOSANTS ESSENTIELLEMENT ÉLECTRIQUES

(30) Priorität: 27.11.2008 DE 202008015696 U
(43) Veröffentlichungstag der Anmeldung: 03.08.2011
(73) Patentinhaber: Kiekert Aktiengesellschaft, 42579 Heiligenhaus (DE)
(72) Erfinder: ZIGANKI, Andreas, 40822 Mettmann (DE)
(74) Vertreter: Nunnenkamp, Jörg
(86) Internationale Anmeldenummer: PCT/DE2009/001572
(87) Internationale Veröffentlichungsnummer: WO 2010/060410

(56) Entgegenhaltungen:
- DE-U1-202007 001 795
- JP-A- 2002 252 482
- JP-B- 48 012 698
- JP-U- 1 123 351
- US-B2- 7 142 433

## Beschreibung

Die Erfindung betrifft einen Komponententräger für elektrische/elektronische Bauelemente als Bestandteile von Kraftfahrzeug-Schließsystemen mit einer Basis und wenigstens einer Seitenwand, wobei die Seitenwand zumindest teilweise lösbar mit der Basis verbunden ist, und wobei das elektrische/elektronische Bauelement einen Bestandteil der Seitenwand darstellt.

Komponententräger für elektrische respektive elektronische Bauelemente werden in der Praxis eingesetzt, um die verschiedenen elektrischen/ elektronischen aber auch mechanischen Bauelemente im Innern beispielsweise eines Kraftfahrzeugtürschlosses aufzunehmen und zusammenzufassen. Eine elektromechanische Baugruppe wird beispielsweise in der DE 103 26 141 B4 beschrieben. Hier sind eine Signalleitung und ein Kontaktfeld durch eine Leiterbahnfolie ausgebildet. Dadurch soll eine erhöhte Lebensdauer gewährleistet werden.

Ein vergleichbarer Komponententräger wird im Rahmen der DE 20 2007 005 076 U1 vorgestellt. Hier geht es um einen Komponententräger für ein Schließsystem, insbesondere einen Komponententräger für Elektro-Bauteile eines Kraftfahrzeugtürschlosses. Der Komponententräger ist einteilig aufgebaut und weist wenigstens einen ersten Abschnitt und einen zweiten Abschnitt auf. Zwischen diesen beiden Abschnitten ist eine labile linienförmige Verbindung vorgesehen.

Schlussendlich beschäftigt sich die DE 10 2006 037 159 A1 mit einer verdrahteten elektrischen Baugruppe und einem Verfahren zu ihrer Herstellung. Dazu ist ein Komponententräger vorgesehen, wobei die von ihm aufgenommenen Komponenten auf oder in einem Bodenbereich des besagten Komponententrägers gehaltert sind. Über dem Bodenbereich verlaufende Schaltungsdrähte sind an Anschlussbereichen der Komponenten befestigt. Der von Schaltungsdrähten durchzogene Freiraum über dem Bodenbereich wird von einer Vergussmasse aufgefüllt. Diese Vergussmasse schützt im Wesentlichen die Kontakte bzw. Kontaktverbindungen der elektrischen/elektronischen Bauelemente, die von dem Komponententräger gehalten und aufgenommen werden. Außerdem sorgt die Vergussmasse für die erforderliche Stabilität des solchermaßen konfektionierten Komponententrägers.

Als Folge dieser Vorgehensweise ist ein relativ ausladender Aufbau der hierdurch gebildeten Vergusswanne unerlässlich. Denn vorm Einbringen der Vergussmasse müssen die elektrischen und/oder mechanischen Verbindungen hergestellt werden. Das setzt voraus, dass innerhalb der aufzufüllenden Vergusswanne genügend Raum für die Anwendung entsprechender Verbindungstechniken wie Löten, Kleben, Bonden etc. zur Verfügung steht. Jedenfalls sind die bisherigen Vergusswannen relativ großvolumig gestaltet. Als Folge hiervon wird eine nicht unbeträchtliche Menge an Vergussmasse benötigt, um die Vergusswanne zu füllen und die elektrischen/mechanischen Verbindungen im Innern zu versiegeln. Das führt zu nicht unerheblichen Kosten, die sich einerseits durch die erforderliche Menge an Vergussmasse erklären und andererseits dadurch bedingt sind, dass der Vorgang zum Füllen der Vergusswanne mit der Vergussmasse erhebliche Zeit in Anspruch nimmt.

Ein gattungsgemäßer Komponententräger wird im Rahmen der US 7 142 433 B1 beschrieben. Hier geht es um ein Verfahren zum Einbetten zumindest einer flexiblen Leiterbahnfolie in Kunststoff. Dazu wird die flexible Leiterbahnfolie an einem sie gegen ein Verbiegen sichernden vorgefertigten Versteifungselement angebracht und zusammen mit dem Versteifungselement mit Kunststoff umspritzt. Als Folge hiervon wird erneut eine relativ komplizierte und kostenaufwendige Vorgehensweise beobachtet.
Der Erfindung liegt das technische Problem zugrunde, einen gattungsgemäßen Komponententräger so weiter zu entwickeln, dass die Menge an erforderlicher Vergussmasse reduziert und die Herstellungszeit beim Einfüllen verringert ist, so dass insgesamt minimierte Produktionskosten resultieren.
Zur Lösung dieser Problemstellung ist bei einem gattungsgemäßen Komponententräger vorgesehen, dass die Seitenwand wenigstens zweiteilig ausgebildet und einen mit der Basis untrennbar verbindbaren Festbestandteil sowie einen mit der Basis lösbar verbindbaren Losbestandteil aufweist, wobei das elektrische/elektronische Bauelement einen Bestandteil des Festbestandteils der Seitenwand darstellt, wobei ferner der Losbestandteil der Seitenwand im Bereich von Anschlusselementen des von der Basis aufgenommenen elektrischen Bauelementes angeordnet ist, und wobei die Seitenwand, die Basis und das elektrische/elektronische Bauelement zusammengenommen eine Vergusswanne definieren.
Erfindungsgemäß ist die Seitenwand also wenigstens zweiteilig ausgebildet und verfügt über einen mit der Basis untrennbar verbundenen oder untrennbar verbindbaren Festbestandteil und einen mit der Basis lösbar verbundenen bzw. verbindbaren Losbestandteil. Meistens formen die Basis und der Festbestandteil ein einstückiges Bauteil, beispielsweise ein Kunststoffspritzgussteil. Mit dieser Baueinheit aus der Basis und dem Festbestandteil wird der Losbestandteil lösbar verbunden.

Dabei hat es sich bewährt, wenn der Losbestandteil als wenigstens eine in Nuten geführte Schottwand ausgebildet ist. Selbstverständlich können auch mehrere Losbestandteile und folglich mehrere jeweils in Nuten geführte Schottwände realisiert werden. Die Nuten für die eine Schottwand oder die mehreren Schottwände können an dem Festbestandteil und/oder dem elektrischen Bauelement oder den mehreren elektrischen Bauelementen ausgebildet sein. Hierbei geht die Erfindung von der Tatsache aus, dass das elektrische Bauelement oftmals einen Bestandteil der Seitenwand darstellt und in die Seitenwand integriert ist. Auf diese Weise wird das Gehäuse des elektrischen Bauelementes quasi als Seitenwand oder Teil derselben genutzt.

Die am Festbestandteil und/oder dem elektrischen Bauelement realisierten Nuten verlaufen im Allgemeinen quer zur Längserstreckung des Festbestandteiles der Seitenwand respektive zur Längserstreckung des elektrischen Bauelementes. Auf diese Weise lässt sich der Losbestandteil der Seitenwand bzw. die Schottwand von oben in eine Ausnehmung einstecken und aus dieser Ausnehmung bei Bedarf wieder herausziehen. Die Ausnehmung wird in der Seitenwand bzw. im Festbestandteil oder zwischen dem Festbestandteil und dem elektrischen Bauelement oder zwischen zwei elektrischen Bauelementen definiert und lässt sich mit Hilfe der Schottwand verschließen, so dass bei eingesetzter Schottwand insgesamt eine Vergusswanne gebildet wird. Denn in diesem Fall formen die Basis, der mit der Basis verbundene Festbestandteil und der wenigstens eine Losbestandteil respektive die Schottwand die betreffende Vergusswanne, welche anschließend mit einem aushärtenden Vergussmittel auf Kunststoffbasis ausgegossen werden kann.

Von besonderer Bedeutung für die Erfindung ist eine Ausgestaltung, bei welcher der Losbestandteil der Seitenwand in Aufsicht auf die Basis unmittelbar oder gering beabstandet im Vergleich zu Anschlusselementen des elektrischen Bauelementes bzw. allgemein zu dem elektrischen Bauelement angeordnet ist. Das heißt, der Losbestandteil der Seitenwand respektive die Schottwand oder die mehreren Schottwände werden an die zu vergießenden Teile und insbesondere die in der Vergusswanne aufgenommenen elektrischen Bauelemente oder die einen Teil der Vergusswanne definierenden elektrischen Bauelemente nahe herangerückt. Tatsächlich schließt der Losbestandteil bzw. die Schottwand unmittelbar an die Anschlusselemente des betreffenden elektrischen Bauelementes an oder verfügt über nur einen geringen Abstand hierzu.

Dadurch erreicht die Erfindung, dass zunächst das elektrische Bauelement kontaktiert wird und auch vorteilhaft kontaktiert werden kann. Denn im Bereich der Anschlusselemente des elektrischen Bauelementes findet sich vorteilhaft die Ausnehmung, in welche nach der Kontaktierung die Schottwand eingesteckt wird. Das heißt, zunächst wird das elektrische Bauelement kontaktiert und erst danach der Losbestandteil mit dem Festbestandteil der Seitenwand verbunden. Erst dann ist die Vergusswanne definiert und lässt sich abschließend mit dem aushärtenden Vergussmittel füllen und versiegeln.

Auf diese Weise ermöglicht die Erfindung einen ungehinderten und freien Zugang zu den Anschlusselementen des elektrischen Bauelementes, weil an dieser Stelle die Ausnehmung in der Seitenwand einen entsprechenden Zugriff und beispielsweise einen leichten Zugang zum Verlöten zur Verfügung stellt. Im Übrigen besteht hierdurch die Möglichkeit, den erfindungsgemäßen Komponententräger zu standardisieren. Tatsächlich ist es denkbar, dass je nach von dem Komponententräger aufgenommenem elektrischen Bauelement sowie demzufolge in Abhängigkeit der topologischen Anordnung der Anschlusselemente des betreffenden Bauelementes im Vergleich zur Basis verschiedene Positionen der einsteckbaren Schottwand möglich sind.

Das heißt, je nach mit der Basis verbundenem elektrischen Bauelement kann der Festbestandteil der Seitenwand über mehrere Nuten verfügen, so dass die nach der Kontaktierung in die Nuten eingesetzte Schottwand eine gewünschte Position unmittelbar oder gering beabstandet zu den Anschlusselementen einnimmt. Dabei ist also in jedem Fall sichergestellt, dass der Losbestandteil der Seitenwand im Bereich der Anschlusselemente des von der Basis aufgenommenen elektrischen Bauelementes angeordnet ist.

Durch die Erfindung wird also nicht nur die Menge an erforderlicher Vergussmasse deutlich reduziert, sondern werden darüber hinaus die Produktionskosten des solchermaßen konfektionierten Komponententrägers einerseits dadurch verringert, dass das Einbringen der Vergussmasse aufgrund der geringeren Menge schneller vonstatten geht und andererseits der Komponententräger durch seine standardisierte Ausgestaltung in größerer Stückzahl als bisher gefertigt werden kann.

Schlussendlich ist die Auslegung meistens so getroffen, dass die Seitenwand und das meistens einen Bestandteil der Seitenwand bildende elektrische Bauelement eine in etwa gleiche Höhe in Seitenansicht aufweisen. Im Übrigen umschließen die Seitenwand und das elektrische Bauelement zusammengenommen die bereits angesprochene Vergusswanne. Wie bereits erläutert, ist die Vergusswanne beim Verbinden des elektrischen Bauelementes mit dem Komponententräger bzw. dessen Basis und auch noch während seiner Kontaktierung offen gestaltet, weil insofern in der Seitenwand die Ausnehmung zur abschließenden Aufnahme der eine oder der mehreren Schottwände offen ist.

Erst wenn sämtliche elektrische Verbindungen hergestellt worden sind, wird der Losbestandteil der Seitenwand respektive die Schottwand in seitlich der Ausnehmung befindliche und sich quer zur Längserstreckung der Seitenwand erstreckende Nuten lösbar eingesteckt. Tatsächlich ist es denkbar, die Schottwand so nah wie möglich an die Anschlusselemente heranzuführen, wobei durch die lösbare Verbindung mit dem Festbestandteil der Seitenwand eine etwaige zuvor eingenommene Position grundsätzlich noch korrigiert werden kann. Das gilt besonders für den Fall, dass seitlich der Ausnehmung mehrere Nuten vorgesehen sind, die eine abstandsvariable Anbringung der Schottwand im Vergleich zu den Anschlusselementen ermöglichen.

Insgesamt geht die Erfindung von der Erkenntnis aus, dass üblicherweise ein elektrisches Bauelement einen Bestandteil der Seitenwand darstellt und zusammen mit der übrigen Seitenwand die Vergusswanne bildet. Dabei finden sich die Anschlusselemente für die elektrische Kontaktierung des Bauelementes im Innern der Vergusswanne bzw. sind nach innen gerichtet an einer Rückwand des elektrischen Bauelementes angeordnet. Bei den elektrischen Anschlusselementen mag es sich um so genannte Lötfahnen handeln, die von der Rückwand des elektrischen Bauelementes größtenteils senkrecht abstehen und ins Innere der Vergusswanne weisen. Dabei versteht es sich, dass die elektrischen Anschlusselemente bzw. Lötfahnen in einer solchen Höhe an die betreffende Rückwand des elektrischen Bauelementes angeschlossen sind, dass sie auf jeden Fall von der in die anschließend zu bildende Vergusswanne eingefüllten Vergussmasse überdeckt werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen Komponententräger ausschnittsweise ohne angebrachte Schottwand und
- Fig. 2: den Komponententräger nach Fig. 1 in abgewandelter Ausgestaltung und mit angebrachter Schottwand vor dem Vergießen.

In den Figuren ist ein Komponententräger, im Detail ein Kraftfahrzeugtürschloss-Komponententräger, dargestellt, der im Wesentlichen elektrische Bauelemente 1 aufnimmt. Bei diesen elektrischen Bauelementen 1 handelt es sich im Ausführungsbeispiel und nicht einschränkend um einen Schalter 1, beispielsweise einen Drehfallenschalter bei einem Kraftfahrzeugtürschloss. Tatsächlich wird der besagte Komponententräger im Innern eines Kraftfahrzeugtürschlosses platziert, wobei das elektrische Bauelement respektive der Schalter 1 die Position einer Drehfalle im Innern des Kraftfahrzeugtürschlosses abfragt. Dabei kann der Komponententräger neben dem elektrischen Bauelement respektive Schalter 1 grundsätzlich auch mechanische Elemente tragen, beispielsweise ein Schneckenradgetriebe, wie dies in der einleitend bereits behandelten DE 103 26 141 B4 beschrieben wird. Das ist im Detail jedoch nicht dargestellt.

Jedenfalls dient ein solcher Komponententräger dazu, im Wesentlichen ein oder mehrere elektrische Bauelemente 1 aufzunehmen, wobei diese elektrischen Bauelemente 1 zusammen mit dem Komponententräger im Beispielfall im Innern des Kraftfahrzeugtürschlosses platziert werden. Dadurch werden die elektrischen Bauelemente bzw. wird der Schalter 1 unmittelbar in seine richtige Position überführt und lässt sich der Zusammenbau des Kraftfahrzeugtürschlosses durch Reduktion auf einzelne wenige Bauteile vereinfachen. Damit das elektrische Bauelement bzw. der Schalter 1 im Beispielfall dauerhaft seiner Funktion nachkommt und nicht beispielsweise durch Umwelteinflüsse seine elektrische Kontaktierung gestört wird, wird das elektrische Bauelement bzw. der Schalter 1 mit dem Komponententräger vergossen. Zu diesem Zweck setzt sich der Komponententräger im Wesentlichen aus einer Basis 2 und einer Seitenwand 3, 4 zusammen.

Erfindungsgemäß ist die Seitenwand 3, 4 zweiteilig ausgelegt und verfügt über einen mit der Basis 2 untrennbar verbundenen bzw. untrennbar verbindbaren Festbestandteil 3 und einen mit der Basis 2 lösbar verbindbaren Losbestandteil 4. Tatsächlich formen die Basis 2 und der Festbestandteil 3 ein einstückiges Bauelement, nach dem Ausführungsbeispiel ein Kunststoffspritzgussteil. Demgegenüber stellt der Losbestandteil 4 einen Teil der Seitenwand 3, 4 dar, welcher auf diese Weise lösbar mit der Basis 2 verbunden ist.

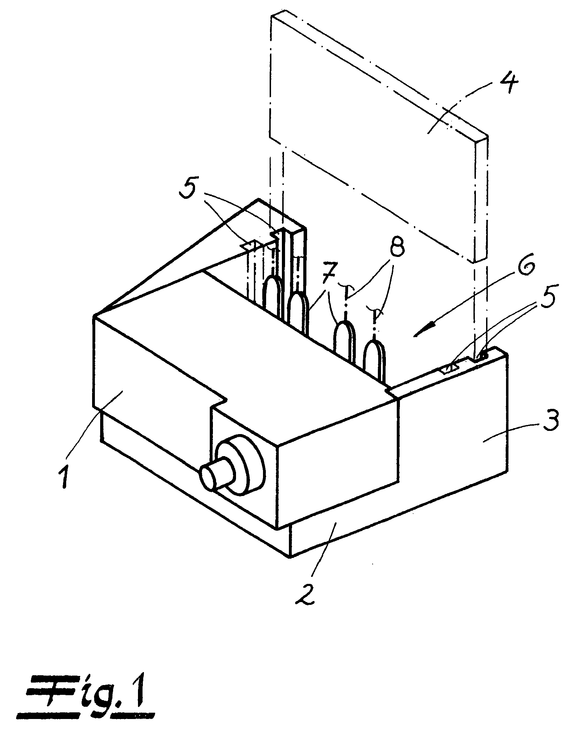

Dazu ist der Losbestandteil 4 als in Nuten 5 geführte Schottwand 4 ausgebildet. Im Rahmen des Ausführungsbeispiels und nicht einschränkend finden sich die Nuten 5 zur Führung des Losbestandteils 4 bzw. der Schottwand jeweils endseitig des Festbestandteils 3 der Seitenwand 3, 4. Die Nuten 5 verlaufen dabei quer zur Längserstreckung des Festbestandteils 3 der Seitenwand 3, 4, so dass sich die Schottwand 4 in eine auf diese Weise definierte Ausnehmung 6 lösbar einstecken und aus dieser wieder herausziehen lässt. Tatsächlich wird die Schottwand 4 von oben in die betreffende Ausnehmung 6 eingesteckt. Bei diesem Vorgang sind mehrere Positionen der Schottwand 4 denkbar, weil mehrere Paare an sich gegenüberliegende Nuten 5 realisiert sind, wie dies die Figur 1 andeutet.

Man erkennt, dass das elektrische Bauelement bzw. der Schalter 1 zunächst einmal in die Seitenwand 3, 4 integriert ist bzw. einen Bestandteil der Seitenwand 3, 4 darstellt. Darüber hinaus ist das elektrische Bauelement bzw. der Schalter 1 an seiner Rückwand mit Anschlusselementen 7 ausgerüstet, welche ins Innere einer aus der Basis 2, den Seitenwänden 3, 4 und schließlich dem elektrischen Bauelement 1 gebildeten Vergusswanne 1, 2, 3, 4 gerichtet sind. Auf diese Weise lassen sich die Anschlusselemente 7 bei entfernter Schottwand 4 durch die Ausnehmung 6 hindurch problemlos kontaktieren, beispielsweise mit lediglich angedeuteten Anschlussleitungen 8 verlöten.

Diese Anschlussleitungen 8 werden im gezeigten Beispiel nach oben aus der Vergusswanne 1 bis 4 herausgeführt. Nachdem das elektrische Bauelement 1 kontaktiert worden ist, wird der Losbestandteil bzw. die Schottwand 4 mit dem Festbestandteil 3 der Seitenwand 3, 4 verbunden, so dass nun die Vergusswanne 1 bis 4 geschlossen ist. In die solchermaßen geschlossene Vergusswanne 1 bis 4 kann nun eine aushärtende Vergussmasse aus Kunststoff eingegossen werden.

Dadurch, dass die Seitenwand 3, 4 und das in die Seitenwand 3, 4 integrierte bzw. einen Bestandteil der Seitenwand 3, 4 bildende elektrische Bauelement 1 eine in etwa gleiche Höhe in Seitenansicht aufweisen, ist sichergestellt, dass die das Höchste dieser Seitenwand 3, 4 nicht überragenden Anschlusselemente 7 mit der in die Vergusswanne 1 bis 4 eingefüllten Vergussmasse überdeckt sind und hierdurch eine einwandfreie und dauerhafte Versiegelung erfahren.

Von besonderer Bedeutung ist nun die Tatsache, dass der Losbestandteil bzw. die Schottwand 4 der Seitenwand 3, 4 in Aufsicht auf die Basis 2 unmittelbar oder gering beabstandet zu den Anschlusselementen 7 angeordnet ist respektive angeordnet werden kann. Dadurch lässt sich die Größe der Vergusswanne 1 bis 4 auf ein Minimum reduzieren. In diesem Zusammenhang besteht auch die Möglichkeit mit mehreren Ausnehmungen 6 zu arbeiten, die von dem jeweiligen Festbestandteil 3 der Seitenwand 3, 4 mit Hilfe der seitlichen Nuten 5 gebildet werden. Das deutet die Fig. 1 an.

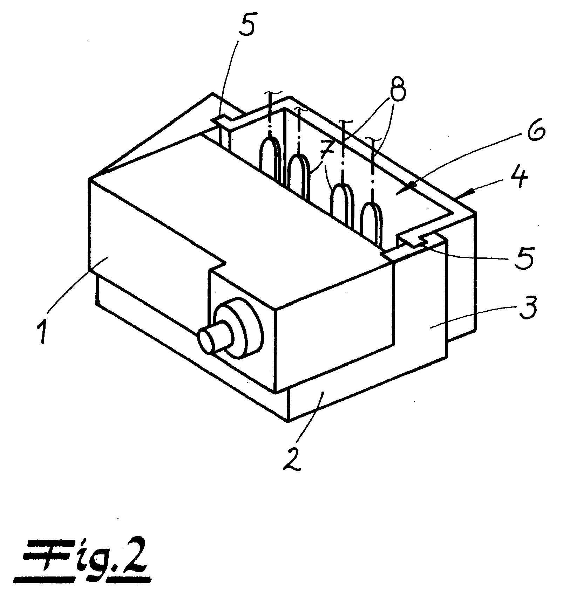

Je nach Größe des in die Seitenwand 3, 4 integrierten elektrischen Bauelementes 1 lässt sich nun die Schottwand respektive der Losbestandteil 4 der Seitenwand 3, 4 an unterschiedlichen Positionen anbringen, wie die Fig. 1 andeutet. Dadurch kann mit einem standardisierten Komponententräger gearbeitet werden, welcher sich mit verschiedenen elektrischen Bauelementen 1 vereinigen lässt. - Schlussendlich deutet die Fig. 2 die weitere Möglichkeit an, mit mehreren Schottwänden 4 zu arbeiten, die im dargestellten Beispiel insgesamt U-förmig gestaltet sind und an die Rückwand des elektrischen Bauelementes 1 anschließen.

## Patentansprüche

1. Komponententräger für elektrische/elektronische Bauelemente (1), als Bestandteile von Kraftfahrzeug-Schließsystemen, mit einer Basis (2) und wenigstens einer Seitenwand (3, 4), wobei
die Seitenwand (3, 4) zumindest teilweise lösbar mit der Basis (2) verbunden ist, und wobei
das elektrische/elektronische Bauelement (1) einen Bestandteil der Seitenwand (3, 4) darstellt,
**dadurch gekennzeichnet, dass**
- die Seitenwand (3, 4) wenigstens zweiteilig ausgebildet und einen mit der Basis (2) untrennbar verbindbaren Festbestandteil (3) sowie einen mit der Basis (2) lösbar verbindendbaren Losbestandteil (4) aufweist, wobei
- das elektrische/elektronische Bauelement (1) einen Bestandteil des Festbestandteils der Seitenwand (3, 4) darstellt, wobei ferner
- der Losbestandteil (4) der Seitenwand (3, 4) im Bereich von Anschlusselementen (7) des von der Basis (2) aufgenommenen elektrischen Bauelementes (1) angeordnet ist, und wobei
- die Seitenwand (3, 4), die Basis (2) und das elektrische Bauelement (1) zusammengenommen eine Vergusswanne (1, 2, 3, 4) definieren.

2. Komponententräger nach Anspruch 1, **dadurch gekennzeichnet, dass** der Losbestandteil (4) als wenigstens eine in Nuten (5) geführte Schottwand (4) ausgebildet ist.

3. Komponententräger nach Anspruch 2, **dadurch gekennzeichnet, dass** die Nuten (5) am Festbestandteil (3) und/oder dem elektrischen Bauelement (1) ausgebildet sind.

4. Komponententräger nach Anspruch 2 oder 3, **dadurch gekennzeichnet, dass** die Nuten (5) quer zur Längserstreckung des Festbestandteiles (3) respektive des elektrischen Bauelementes (1) verlaufen.

5. Komponententräger nach einem der Ansprüche 1 bis 4, **dadurch gekennzeichnet, dass** der Losbestandteil (4) der Seitenwand (3, 4) in Aufsicht auf die Basis (2) unmittelbar oder gering beabstandet an den Anschlusselementen (7) des elektrischen Bauelementes (1) anliegt.

6. Komponententräger nach einem der Ansprüche 1 bis 5, **dadurch gekennzeichnet, dass** die Seitenwand (3, 4) und das elektrische Bauelement (1) eine in etwa gleiche Höhe in Seitenansicht aufweisen.

7. Komponententräger nach einem der Ansprüche 1 bis 6, **dadurch gekennzeichnet, dass** die Basis (1) und der Festbestandteil (3) der Seitenwand (3, 4) als vorzugsweise einteiliges Kunststoffformteil ausgebildet sind.

8. Komponententräger nach einem der Ansprüche 1 bis 7, **dadurch gekennzeichnet, dass** zunächst das elektrische Bauelement (1) kontaktiert, dann der Losbestandteil (4) mit dem Festbestandteil (3) verbunden und abschließend die solchermaßen gebildete Vergusswanne (1, 2, 3, 4) mit Vergussmasse gefüllt wird.

## Claims

1. Component carrier for electrical/electronic components (1), as components of motor vehicle locking systems, with a base (2) and at least one side wall (3, 4), wherein
the side wall (3, 4) is connected to the base (2) in such manner that it can be at least partly detached therefrom
the electrical/electronic component (1) constitutes a part of the side wall (3, 4),
**characterized in that**
- the side wall (3, 4) is constructed in at least two parts and has one fixed part (3) which is inseparably connectable to the base (2) and one loose part (4) which is detachably connectable to the base (2), wherein
- the electrical/electronic component (1) constitutes a part of the fixed part of the side wall (3, 4), wherein further
- the loose part (4) of the side wall (3, 4) is arranged close to connecting elements (7) of the electrical component (1) which is accommodated in the base (2), and wherein
- the side wall (3, 4), the base (2) and the electrical component (1) together define a casting trough (1, 2, 3, 4).

2. Component carrier according to claim 1, **characterized in that** the loose part (4) has the form of at least one bulkhead (4) which is guided in grooves (5).

3. Component carrier according to claim 2, **characterized in that** the grooves (5) are conformed on the fixed part (3) and/or on the electrical component (1).

4. Component carrier according to either of claims 2 or 3, **characterized in that** the grooves (5) extend transversely to the longitudinal extension of the fixed part (3) and of the electrical component (1).

5. Component carrier according to any one of claims 1 to 4, **characterized in that** when the base (2) is viewed from above the loose part (4) of the side wall (3, 4) lies flush with or at only a small distance from the connecting elements (7) of the electrical component (1).

6. Component carrier according to any one of claims 1 to 5, **characterized in that** the side wall (3, 4) and the electrical component (1) are approximately the same height, when viewed from the side.

7. Component carrier according to any one of claims 1 to 6, **characterized in that** the base (1) and the fixed part (3) of the side wall (3, 4) are designed as a preferably one-piece plastic moulded part.

8. Component carrier according to any one of claims 1 to 7, **characterized in that** first the electrical component (1) is contacted, then the loose part (4) is connected to the fixed part (3), and finally the casting trough (1, 2, 3, 4) constructed in this way is filled with potting compound.

## Revendications

1. Support de composants pour composants électriques/électroniques (1) en tant qu'éléments constitutifs de systèmes de fermeture de véhicule automobile, avec une base (2) et au moins une paroi latérale (3, 4), pour lequel
la paroi latérale (3, 4) est reliée au moins en partie de manière amovible avec la base (2), et pour lequel le composant électrique/électronique (1) représente un élément constitutif de la paroi latérale (3, 4)
**caractérisé en ce que**
- la paroi latérale (3, 4) est constituée au moins en deux parties et comporte un élément constitutif fixe (3) pouvant être relié de manière inséparable à la base (2) ainsi qu'un élément constitutif amovible (4) pouvant être relié de manière amovible à la base (2), pour lequel
- le composant électrique/électronique (1) présente un élément constitutif de l'élément constitutif fixe de la paroi latérale (3, 4), pour lequel de plus
- l'élément constitutif amovible (4) de la paroi latérale (3, 4) est disposé dans la zone des éléments de raccordement (7) du composant (1) électrique logé par la base (2), et pour lequel
- la paroi latérale (3, 4), la base (2) et le composant électrique (1) définissent réunis ensemble une cuve de scellement (1, 2, 3, 4).

2. Support de composants selon la revendication 1 **caractérisé en ce que** l'élément constitutif amovible (4) est constitué comme au moins une paroi de cloison (4) guidée dans des rainures (5).

3. Support de composants selon la revendication 2 **caractérisé en ce que** les rainures (5) sont constituées sur l'élément constitutif fixe (3) et/ou le composant électrique (1).

4. Support de composants selon la revendication 2 ou 3 **caractérisé en ce que** les rainures (5) passent transversalement à l'extension longitudinale de l'élément constitutif fixe (3) par rapport au composant électrique (1).

5. Support de composants selon l'une quelconque des revendications 1 à 4 **caractérisé en ce que** l'élément constitutif amovible (4) de la paroi latérale (3, 4) repose vu en plan sur la base (2) directement ou à légèrement distance sur les éléments de raccordement (7) du composant électrique (1).

6. Support de composants selon l'une quelconque des revendications 1 à 5 **caractérisé en ce que** la paroi latérale (3, 4) et le composant électrique (1) présentent en vue de côté à peu près la même hauteur.

7. Support de composants selon l'une quelconque des revendications 1 à 6 **caractérisé en ce que** la base (1) et l'élément constitutif fixe (3) de la paroi latérale (3, 4) sont constitués de préférence comme une pièce moulée monobloc en matière plastique.

8. Support de composants selon l'une quelconque des revendications 1 à 7 **caractérisé en ce qu'**en premier lieu le composant électrique (1) est en contact, puis l'élément constitutif amovible (4) est relié à l'élément constitutif fixe (3) et finalement la cuve de scellement (1, 2, 3, 4) ainsi constituée est remplie d'une masse de scellement.
